(19) Europäisches Patentamt
European Patent Office
Office européen des brevets

(11) Veröffentlichungsnummer: **0 559 033 A1**

(12) # EUROPÄISCHE PATENTANMELDUNG

(21) Anmeldenummer: **93102698.3**

(51) Int. Cl.[5]: **C08G 59/18**, C08L 63/00

(22) Anmeldetag: **20.02.93**

(30) Priorität: **29.02.92 DE 4206392**

(43) Veröffentlichungstag der Anmeldung:
**08.09.93 Patentblatt 93/36**

(84) Benannte Vertragsstaaten:
**AT BE CH DE DK ES FR GB IT LI NL PT SE**

(71) Anmelder: **HOECHST AKTIENGESELLSCHAFT**

**D-65926 Frankfurt(DE)**

(72) Erfinder: **Marten, Manfred**
**Am Eiskeller 55**
**W-6500 Mainz 21(DE)**
Erfinder: **Stengel-Rutkowski, Bernhard**
**Auf den Erlen 81**
**W-6200 Wiesbaden(DE)**
Erfinder: **Godau, Claus**
**Halbritterstrasse 9**
**W-6229 Kiedrich(DE)**

(54) **Härtungsmittel für Epoxidharze.**

(57) Härtungsmittel für Epoxidharze bestehend aus Umsetzungsprodukten von
(A) Polyamidoaminen, die erhalten wurden durch Polykondensation von (a) Dicarbonsäuren, die Oxalkylengruppen enthalten, oder deren Derivaten mit (b) Polyaminen, die mindestens zwei, mit (a) kondensationsfähige Aminogruppen enthalten,
(B) Polyaminen mit mindestens zwei sekundären Aminogruppen und
(C) Addukten aus (c) Polyepoxidverbindungen und (d) Polyalkylenpolyetherpolyolen.
Epoxidharze, die mit diesen Härtern ausgehärtet werden, zeigen insbesondere eine sehr gute Wasserfestigkeit.

EP 0 559 033 A1

Epoxidharze, insbesondere solche, die aus Bisphenol A und Epichlorhydrin hergestellt werden, sind bekannte Rohstoffe für die Herstellung von qualitativ hochwertigen Gießharzen und Beschichtungsmassen. Diese mit Polyaminen gehärteten aromatischen Epoxidharze besitzen neben guter Chemikalien- und Lösungsmittelbeständigkeit eine gute Haftfestigkeit auf vielen Untergründen. Lösungsmittelfrei verarbeitbaren, möglichst niedrigviskosen Bisphenol-A-Epoxidharzen kommt eine erhebliche Bedeutung zu, beispielsweise für den Schutz und die Sanierung von Betonbauwerken, als Betonzusatzstoffe (ECC-Bereich, ECC = epoxide cement concrete), für elastische Klebstoffsysteme in verschiedenen Anwendungsbereichen und für die Lackierung unterschiedlichster Substrate. Die Härtung der Epoxidharze kann bei Verwendung von Polyaminen bei Umgebungstemperatur erfolgen.

Häufig ist die Anwendbarkeit der Epoxidharz/Polyamin-Systeme jedoch begrenzt durch eine unzureichende Elastizität bzw. Flexibilität im vernetzten Zustand. Für eine dauerhafte Rißüberbrückung werden aber Beschichtungsstoffe gefordert, die aufgrund ihrer hohen Elastizität über dem Riß "arbeiten" und dabei große Temperaturwechselbelastungen durch eine hohe Dehnbarkeit auffangen können.

Außerdem werden auf dem Klebstoffsektor elastische Epoxidharzsysteme benötigt, die noch bei tiefen Temperaturen (z.B. bis zu -30 °C) eine ausreichende Elastizität aufweisen. Darüber hinaus wird von Lackierungen erwartet, daß sie eine starke Verformung des Untergrundes ohne Bruch und Riß überstehen.

Prinzipiell kann man zwar extern durch Weichmacherzusatz oder intern durch Verringerung der Vernetzungsdichte die Elastizität von Epoxidharzsystemen erhöhen. Externe Elastifizierungsmittel sind jedoch nicht reaktiv und werden nicht in das Duromer-Netzwerk eingebaut. Als externe Weichmacher können Teer, Phthalsäureester, hochsiedende Alkohole, Ketonharze, Vinylpolymere und andere mit Epoxidharzen und Aminhärtern nicht reagierende Produkte eingesetzt werden. Diese Art der Modifizierung ist allerdings nur auf spezifische Anwendungsgebiete beschränkt, da sie eine Reihe von Nachteilen aufweist. So führen diese Zusätze zu einer starken Störung der Duromerstruktur, sind in ihrem Weichmachungseffekt bei tiefen Temperaturen begrenzt und neigen bei Temperaturbeanspruchung und Alterung zum Ausschwitzen. Zur internen Erhöhung der Elastizität werden mit den Epoxidharzen oder Härtern reagierende Verbindungen, die in die Vernetzung mit einbezogen werden, zugesetzt. Im einzelnen wird die elastifizierende Wirkung durch Einbau von langkettigen aliphatischen oder stark verzweigten Zusätzen, z.B. in die Härtungskomponente, erreicht. In der Praxis läßt sich so die Elastizität der Epoxidharzsysteme in gewissem Umfang durch den Einsatz von bestimmten Härtungsmitteln steuern. So können die gebräuchlichen Polyamine wie z.B. Ethylendiamin, Diethylentriamin, Triethylentetramin durch Umsetzung mit längerkettigen mehrbasischen Säuren in Polyamidoamine umgewandelt werden. Diese schon lange in erheblichem Umfang gebräuchlichen Härtungsmittel liefern ein befriedigendes Eigenschaftsbild weicher Härter für Epoxidharze, erfüllen aber nicht die Forderungen für ein zäh-elastisches Epoxidharzsystem, wie es für viele Anwendungen nötig ist.

Darüber hinaus sollen diese Epoxidharz-Härtersysteme eine niedrige Viskosität aufweisen. Da Lösungsmittel aus Umweltschutzgründen häufig nicht mehr verwendet werden können, ist es erforderlich, entsprechende wäßrige Systeme bereitzustellen.

In der DE-OS 39 01 279 sind bereits Polyamidoamine als Härter für Epoxyharze beschrieben. Diese Polyamidoamine werden erhalten durch Polykondensation von (a) Dicarbonsäuren, die Oxyalkylengruppen enthalten, oder deren Derivate mit (b) Polyaminen, die mindestens zwei, mit (a) kondensationsfähige Aminogruppen enthalten.

Bei Verwendung dieser bekannten Epoxidharzhärter werden hochelastische Epoxidharz-Systeme erhalten. Für Anwendungszwecke, bei denen eine Verdünnung mit Wasser erforderlich ist, insbesondere aber bei der Verarbeitung mit Epoxidharz-Dispersionen, sind die Polyamidoamine der DE-OS 39 01 279 in nur begrenztem Umfang brauchbar, da sie keine ausreichende Wasserverträglichkeit zeigen. In den Fällen, in denen es noch möglich ist, aus wäßriger Lösung Beschichtungen zu erzeugen, werden ungenügende anwendungstechnische Eigenschaften gefunden.

Aufgabe der Erfindung war es daher, Härter sowie diese enthaltende härtbare Mischungen auf Basis von Epoxidharzen bereitzustellen, welche die Nachteile der bekannten Systeme nicht oder zumindest nur in vermindertem Umfange aufweisen.

Es wurde nun gefunden, daß die im folgenden beschriebenen, erfindungsgemäßen Härtungsmittel für Epoxidharze überraschenderweise diese Nachteile nicht zeigen. Härtbare Massen aus diesen Härtern und epoxygruppenhaltigen Verbindungen (Epoxidharzen) liefern vielmehr gut haftende Überzüge oder Klebstoffe, Flächengebilde, Dichtungsmassen, Formteile udgl. mit hoher Schlag- und Stoßfestigkeit, hoher Elastizität auch bei tiefen Temperaturen sowie guten rißüberbrückenden Eigenschaften.

Insbesondere zeigen diese neuen Härtungsmittel eine hervorragende Wasserverträglichkeit. Sie können deshalb als wäßrige Lösungen bereitgestellt und für die Härtung wäßriger Epoxidharz-Systeme eingesetzt werden. Durch die Abwesenheit organischer Lösungsmittel entfallen die durch Geruch, Giftigkeit und

Entzündlichkeit verursachten Probleme; ferner können alle Anlagen, die mit dem Härtungsmittel in Berührung kommen, durch Waschen mit Wasser gereinigt werden. Die mit Hilfe der erfindungsgemäßen Härtungsmittel hergestellten Beschichtungen zeigen ausgezeichnete lacktechnische Eigenschaften.

Gegenstand der Erfindung sind Härtungsmittel für Epoxidharze bestehend aus Umsetzungsprodukten von

(A) Polyamidoaminen, die erhalten wurden durch Polykondensation von (a) Dicarbonsäuren, die Oxalkylengruppen enthalten, oder deren Derivaten mit (b) Polyaminen, die mindestens zwei, mit (a) kondensationsfähige Aminogruppen enthalten,

(B) Polyaminen mit mindestens zwei sekundären Aminogruppen und

(C) Addukten aus (c) Polyepoxidverbindungen und (d) Polyalkylenpolyetherpolyolen.

Die bei der Herstellung der erfindungsgemäßen Härtungsmittel verwendeten Polyamidoamine (A), die vorzugsweise linearen Kettenaufbau besitzen, sind aus der DE-OS 39 01 279 bekannt. Sie enthalten im Durchschnitt pro Molekül mindestens 2, vorzugsweise 2 bis 4 primäre und/oder sekundäre Aminogruppen, wovon mindestens eine Aminogruppe vorzugsweise primär ist. Vorzugsweise enthalten diese Polyamidoamine 2 primäre Aminogruppen oder 2 primäre und 2 sekundäre Aminogruppen. Grundsätzlich sind auch Polyamidoamine ohne primäre Aminogruppen, dafür z.B. mit 2 oder mehr sekundären Aminogruppen, einsetzbar, jedoch ist diese Variante in der Regel weniger vorteilhaft. Die Aminzahl liegt im allgemeinen zwischen 8 und 900, vorzugsweise zwischen 50 und 500, und insbesondere zwischen 100 und 400 mg KOH/g, während die Säurezahl zumeist 0,01 bis 10, vorzugsweise 0,01 bis 3 mg KOH/g beträgt. Weiterhin besitzen diese Polyamidoamine (A) Wasserstoffaktiväquivalente von im allgemeinen 50 bis 3500, vorzugsweise 50 bis 500 und insbesondere 70 bis 300, sowie mittlere Molekulargewichte $M_n$ (Zahlenmittel) von 200 bis 15000, vorzugsweise von 200 bis 2500.

Je nach Art der Ausgangskomponenten (a), (b) und deren Molverhältnis sowie dem Molekulargewicht von (A) handelt es sich bei diesen Polyamidoaminen um niedrigviskose bis hochviskose oder feste Produkte, die ggf. je nach ihrer Verwendung auch in einem organischen Lösungsmittel oder in Wasser eingesetzt werden können.

Die Herstellung der Polyamidoamine (A) erfolgt in bekannter Weise durch Umsetzung der Verbindungen (a) mit den Polyaminen (b) z.B. durch mehrstündiges Erhitzen der Komponenten unter Ausschluß von Sauerstoff auf Temperaturen von 125-250 °C, vorzugsweise 150-190 °C, zunächst unter gewöhnlichem Druck und dann ggf. unter vermindertem Druck. Verwiesen sei in diesem Zusammenhang auf Sato, Iwabuchi, Böhmer und Kern (Makromol. Chem. 182, Seiten 755-762(1981)), Kern, Kämmerer, Böhmer und Bhagwat (Angewandte Makromolekulare Chemie 113, Seiten 53-59 (1983)), Imai, Ogata, Kakimoto (Makromol. Chem., Rapid Commun. 5, 47-51(1984)) sowie auf die DE-OS 26 58 714, die JP-OS 84/1532 und die EP-OS 332 967.

Die Verbindungen (a) stellen Oxalkylen-, vorzugsweise Oxethylengruppen enthaltende Dicarbonsäuren oder deren mit (b) reaktive Derivate, wie Anhydride, Halogenide und insbesondere Ester dar. Vorzugsweise besitzen diese Verbindungen (a) die Formel (I)

$$R^2\text{-OOC-CH}_2\text{-[-O-R}^1\text{-]}_n\text{O-CH}_2\text{-COOR}^2 \qquad \text{(I)}$$

in der bedeuten

- $R^1$ = verzweigter oder unverzweigter Alkylenrest mit 2 bis 5, vorzugsweise 2 C-Atomen;
- $R^2$ = unabhängig voneinander Wasserstoff oder ein verzweigter oder unverzweigter Alkylrest mit 1 bis 6, vorzugsweise 1 bis 3 C-Atomen;
- n = 0 oder eine ganze Zahl von 1 bis 300, vorzugsweise 1 bis 50 und insbesondere 1 bis 25.

Beispiele für Verbindungen (a) sind: 3,6-Dioxaoctandisäure, 3,6,9-Trioxaundecandisäure, Polyglycoldisäure mit einem Molgewicht von ca. 400, bevorzugt von ca. 600 oder Mischungen dieser Säuren.

Die Herstellung dieser Verbindungen (a) ist bekannt (vgl. beispielsweise die DE-OS 29 36 123) und erfolgt z.B. durch Oxidation von Polyglykolen in Gegenwart von Katalysatoren.

Die Verbindungen (a) können gegebenenfalls auch bis zu 40 %, vorzugsweise bis zu 30 % einer aliphatischen, cycloaliphatischen oder aromatischen Dicarbonsäure bzw. Gemische dieser Säuren enthalten.

Als aliphatische Dicarbonsäuren, deren aliphatischer Rest im allgemeinen 1 bis 20, vorzugsweise 2 bis 12 C-Atome enthält, seien beispielsweise Bernsteinsäure, Glutarsäure, Adipinsäure, Korksäure, Azelainsäure, Sebacinsäure und Dodecansäure genannt. Geeignete cycloaliphatische Carbonsäuren, deren cycloaliphatischer Rest zumeist 5 bis 12, vorzugsweise 6 bis 8 C-Atome umfaßt, sind z.B. die verschiedenen Cyclohexandicarbonsäure-Isomeren, Hexahydrophthalsäure und Tetrahydrophthalsäure. Als aromat. Dicarbonsäuren können z.B. verwendet werden: Terephthalsäure, Isophthalsäure, o-Phthalsäure oder verschiedene Naphthalin-dicarbonsäuren, beispielsweise 2,6-Napthalindicarbonsäure. Besonders bevorzugt ist dabei

Terephthalsäure. Es können auch Gemische der aromatischen Dicarbonsäuren eingesetzt werden.

Weitere geeignete aromatische Carbonsäuren sind solche des Typs

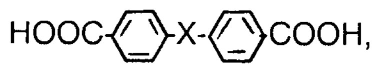

wobei X für eine chemische Bindung, für Alkylenreste mit 1 bis 6 C-Atomen, für O oder CO steht.

Die Polyamine (b), die mit den Verbindungen (a) zu den Polyamidoaminen (A) umgesetzt werden, besitzen mindestens zwei mit (a) kondensationsfähige Aminogruppen, von denen vorzugsweise mindestens eine primär ist; besonders bevorzugt enthält (b) 2 primäre Aminogruppen. Hierfür geeignet sind beispielsweise solche der Formel (II)

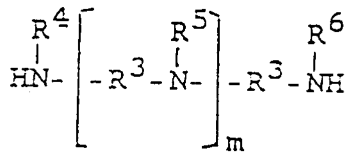

(II)

in der bedeuten

$R^3$ = unabhängig voneinander zweiwertiger Kohlenwasserstoffrest mit 1 bis 20, vorzugsweise 2 bis 12 C-Atomen, vorzugsweise verzweigter oder unverzweigter Alkylenrest mit 1 bis 20, vorzugsweise 2 bis 6 C-Atomen, Cycloalkylenrest mit 5 bis 12, vorzugsweise 6 bis 10 C-Atomen oder Aralkylenrest mit 7 bis 12, vorzugsweise 8 bis 10 C-Atomen;

$R^4$, $R^5$, $R^6$ = unabhängig voneinander Wasserstoff, Kohlenwasserstoffrest mit 1 bis 20, vorzugsweise 1 bis 12 C-Atomen, vorzugsweise verzweigter oder unverzweigter Alkylrest mit 1 bis 20, vorzugsweise 1 bis 6 C-Atomen, Cycloalkylenrest mit 5 bis 12, vorzugsweise 6 bis 10 C-Atomen oder Aralkylenrest mit 7 bis 12, vorzugsweise 8 bis 10 C-Atomen, wobei diese Reste auch durch Heteroatome unterbrochen sein können oder

$R^4$ und $R^5$ = Teil eines vorzugsweise gesättigten Ringsystems mit 3 bis 8, vorzugsweise 3 und 4 C-Atomen;

m = 0 oder eine ganze Zahl von 1 bis 8, vorzugsweise 0 und 1 bis 4.

Vorzugsweise steht $R^4$ und/oder $R^6$ für Wasserstoff.

Beispiele für derartige Polyamine (b) sind: Ethylendiamin, 1,2-Diaminopropan, 1,3-Diaminopropan, 1,3-Diaminobutan, 1,4-Diaminobutan, 1-Amino-3-methylamino-propan, 2-Methylpentamethylendiamin, Pentamethylendiamin, Hexamethylendiamin, Trimethylhexamethylendiamin, Neopentyldiamin, Octamethylendiamin, cycloaliphatische Diamine wie 1,2-, 1,3- oder 1,4-Cyclohexandiamin; 4,4'-Methylen-bis-cyclohexylamin, Isophorondiamin, Menthandiamin, 4,4'-Diamino-3,3'-dimethyl-dicyclohexylmethan, 3-Aminomethyl-1-(3-aminopropyl-1-methyl)-4-methylcyclohexan, N-Methylethylendiamin, N-Aminoethylpiperazin, Xylylendiamin, Tricyclododecyldiamin, N-Cyclohexylpropandiamin, Methyl-bis-(3-aminopropyl)-amin, Ethyl-bis-(3-aminopropyl)-amin, N-(3-Aminopropyl)-tetramethylendiamin, N,N'-Bis-(3-aminopropyl)-tetramethylendiamin, Polyalkylenpolyamine, wie Dipropylen-(1,2)-triamin, Bis-(3-amino-propyl)-amin, Tripropylen-(1,2)-tetramin, Diethylentriamin, Triethylentetramin und Tetraethylenpentamin, die handelsüblichen primären aliphatischen Polyoxipropylen-di- oder triamine sowie Etherdiamine wie z.B. 1,7-Diamino-4-oxa-heptan, 1,7-Diamino-3,5-dioxa-heptan, 1,10-Diamino-4,7-dioxa-decan, 1,10-Diamino-4,7-dioxa-5-methyldecan, 1,11-Diamino-4,8-dioxaundecan, 1,11-Diamino-4,8-dioxa-5-methyl-undecan, 1,12-Diamino-4,9-dioxa-dodecan, 1,13-Diamino-4,10-dioxatridecan, 1,13-Diamino-4,7,10-trioxa-5,8-dimethyl-tridecan,1,14-Diamino-4,7,10-trioxa-tetradecan,1,16-Diamino-4,7,10,13-tetraoxahexadecan, 1,20-Diamino-4,17-dioxaeicosan. Besonders bevorzugt sind dabei 2-Methylpentandiamin, Diethylentriamin, Triethylentetramin, Isophorondiamin, m-Xylylendiamin und Trimethylhexamethylendiamin. Es können auch Mischungen dieser Amine eingesetzt werden.

Für die erfindungsgemäßen Härtungsmittel können als Polyamine (B) mit mindestens zwei sekundären Aminogruppen solche eingesetzt werden, wie sie vorstehend unter A (b) beschrieben sind.

Die bei der Herstellung der erfindungsgemäßen Härtungsmittel verwendeten Addukte (C) werden erhalten aus Polyepoxidverbindungen (c) und Polyalkylenpolyetherpolyolen (d) mit einem mittleren Molekulargewicht von 200 bis 20000, vorzugsweise durch Umsetzung im Äquivalentverhältnis von c : d = 2 : (0,1 bis 1,5).

Als Katalysatoren für die Herstellung der Addukte (C) eignen sich starke anorganische und organische Basen, wie zum Beispiel Natriumhydroxid, Kaliumhydroxid, Lithiumhydroxid, Bariumhydroxid, Strontiumhydroxid, Alkalialkoholate wie Natriummethylat, Lithiummethylat, Natriumethylat, Kaliumdodecylat und Metallalkoholate von Polyoxyalkylenpolyolen, die Alkalisalze von Carbonsäuren, wie zum Beispiel Natrium- und Lithiumstearat, sowie Metallsalze von Alkancarbonsäuren, wie zum Beispiel Zinnoctoat. Ebenfalls geeignet sind quartäre Ammoniumverbindungen und starke anorganische und organische Protonsäuren, wie zum Beispiel Phosphorsäure, Tetrafluoroborsäure und Benzolsulfonsäure. Ferner können als Katalysatoren Lewis-Säuren verwendet werden. Als Beispiele seien genannt Zinkchlorid, Eisen(III)chlorid, Aluminiumchlorid, Zinn(II)dichlorid, Zinn(IV)-tetrachlorid, Titan(IV)tetrachlorid, Titan(IV)tetraisopropylat, Triethyloxoniumtetrafluoroborat sowie Bortrifluorid und seine Komplexe, zum Beispiel mit Phosphorsäure, Essigsäure (1 : 1 und 1 : 2), Methanol, Diethylether, Tetrahydrofuran, Phenol, Ethylenglykolmonoethylether, Polyethylenglykol (MG 200), Dimethylsulfoxyd, Di-n-butylether, Di-n-hexylether, Bernsteinsäure und aliphatische, cycloaliphatische, araliphatische Amine sowie Stickstoff-Heterocyclen.

Bevorzugt werden $BF_3$-Benzylamin, $BF_3$-Monoethylamin, $BF_3$-Propylamin und $BF_3$-n-Butylamin eingesetzt. Für ein g-Äquivalent einer mit einem g-Äquivalent einer Epoxidgruppe umzusetzenden Hydroxylgruppe werden 100 bis 1, bevorzugt 15 bis 2 mMol, des $BF_3$-Aminkomplexes eingesetzt. Die Umsetzung der Hydroxylgruppen mit den Epoxydgruppen kann im Temperaturbereich von 20 bis 200 °C vorgenommen werden. Die Umsetzungstemperatur ist abhängig von dem jeweiligen $BF_3$-Aminkomplex. Beispielsweise liegt die Umsetzungstemperatur bei Verwendung von $BF_3$-Monoethylamin oder $BF_3$-Benzylamin um 130 °C. Man erwärmt deshalb zweckmäßig die umzusetzenden Gemische aus Hydroxylgruppen und Epoxydgruppen enthaltenden Verbindungen bis zu derjenigen Temperatur, bei der die Umsetzung mit ausreichender Geschwindigkeit, d.h. in 30 Minuten bis 15 Stunden, abläuft. Die Umsetzung verfolgt man zweckmäßig über die Zunahme des Epoxydäquivalents, das eine Verminderung der Epoxydgruppen anzeigt. Die Reaktion kann durch Kühlung unter die Reaktionstemperatur abgebrochen werden.

Als Polyepoxidverbindungen (c) kommen eine Vielzahl der hierfür bekannten Verbindungen in Betracht, die im Mittel mehr als eine Epoxidgruppe, vorzugsweise 2 Epoxidgruppen, pro Molekül enthalten. Diese Epoxidverbindungen (Epoxidharze) können dabei sowohl gesättigt als auch ungesättigt sowie alphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen und ähnliche. Vorzugsweise handelt es sich dabei um Glycidylether, die sich von mehrwertigen Phenolen, insbesondere Bisphenolen sowie Novolaken ableiten und deren Epoxidäquivalentgewichte zwischen 160 und 500, insbesondere jedoch zwischen 160 und 200 liegen.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan,4,4'-Dihydroxy-3,3'-dimethyldiphenylpropan,4,4'-Dihydroxydiphenyl, 4,4'-Dihydroxybenzophenon, Bis-(4-hydroxyphenyl)-1,1-äthan,Bis-(4-hydroxyphenyl)-1,1-isobutan,Bis-(4-hydroxy-tert.-butylphenyl)-2,2-propan,Bis-(2-hydroxynaphthyl)-methan, 1,5-Dihydroxynapthalin, Tris-(4-hydroxyphenyl)-methan, Bis-(4-hydroxyphenyl)-ether, Bis-(4-hydroxyphenyl)-sulfon u.a. sowie die Chlorierungs- und Bromierungsprodukte der vorstehend genannten Verbindungen. Ganz besonders bevorzugt werden flüssige Diglycidylether auf Basis von Bisphenol A mit einem Epoxidäquivalentgewicht von 180 bis 190.

Es können auch Polyglycidylether von Polyalkoholen verwendet werden, wie z.B. Ethandiol-1,2-diglycidylether, Butandioldiglycidylether, Neopentylglycoldiglycidylether, Hexandioldiglycidylether, Polyproylenglycoldiglycidylether, Polyethylenglycoldiglycidylether, Mischpolyethylenpropylenglycoldiglycidylether, Glycidylether des Glycerins, Trimethylolpropans und des Pentaerythrits.

In besonderen Fällen können zusätzlich zu den Polyglycidylethern geringe Mengen reaktiver Verdünner, wie z.B. Butylglycidylether, Ethylhexylglycidylether, langkettige aliphatische Glycidylether, Monoglycidylether eines höheren isomeren Alkoholgemisches, Phenylglycidylether, Kresylglycidylether und p.t.-Butylphenylglycidylether in Mengen bis zu 30 %, vorzugsweise 10-20 %, bezogen auf Polyglycidylether mitverwendet werden.

Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäureund dimerisierte Linolensäure erhält. Beispiele sind Adipinsäurediglycidylester, Phthalsäurediglycidylester und Hexahydrophthalsäurediglycidylester.

Eine ausführliche Aufzählung der geeigneten Epoxidverbindungen findet sich in dem Handbuch "Epoxidverbindungen und Epoxidharze" von A.M.Paquin, Springer Verlag, Berlin 1958, Kapitel IV, und in Lee Neville "Handbook of Epoxy Resins", 1967, Chapter 2. Weiterhin sei hier auf die EP-OS 272 595 und 286 933 verwiesen.

Es können auch Mischungen von mehreren Epoxidharzen verwendet werden.

Bei den Polyalkylenpolyetherpolyolen (d) handelt es sich vorzugsweise um Polyetherpolyole (Polyalkylenglycole) mit mittleren Molekulargewichten (Mw; Gelpermeationschromatographie; Polystyrolstandard) von bevorzugt zwischen 200 bis 20000, insbesondere 200 bis 8000. Diese Polyetherpolyole können primäre und/oder sekundäre Hydroxylgruppen aufweisen, vorzugsweise nur endständige primäre Hydroxylgruppen. Beispielsweise seien hier Blockpolymere aus Ethylenoxid und Propylenoxid sowie Polyethylen-, Polypropylen-, Polybutylenglycole genannt, wobei auch Gemische der jeweiligen Polyalkylenglycole eingesetzt werden können.

Zur Herstellung der erfindungsgemäßen Härtungsmittel werden im allgemeinen die Polyamidoamine (A) und die Polyamine (B) gemischt und bei 20 bis 200 °C, vorzugsweise bei 40 bis 120 °C portionsweise oder durch Zulauf innerhalb von 0,3 bis 10 Stunden, vorzugsweise innerhalb von 0,3 bis 3 Stunden mit dem Addukt (C) aus Polyepoxidverbindungen (c) und Polyalkylenpolyolen (d) versetzt. Die Umsetzung erfolgt in Substanz, d.h. in Abwesenheit von Wasser oder organischen Lösemitteln. Nach Beendigung der Reaktion wird mit Wasser auf einen Gehalt an Wasser von 20 bis 90, vorzugsweise 50 bis 85 Gew.-% verdünnt. Die Mengen der jeweiligen Ausgangskomponenten A, B, und C werden so gewählt, daß das Wasserstoffäquivalentgewicht (HAV) bei der Komponente (B) 0,5 bis 20, vorzugsweise 1 bis 10, und das Epoxidäquivalentgewicht (EV) bei der Komponente (C) 0,1 bis 10, vorzugsweise 0,5 bis 1,5, beträgt, jeweils bezogen auf einen HAV-Wert von 1 bei der Komponente (A).

In manchen Fällen kann es auch zweckmäßig sein, zunächst die Umsetzung des Polyamidoamins (A) mit dem Addukt (C) vorzunehmen und anschließend das Reaktionsprodukt aus (A) und (C) mit dem Polyamin (B) zu versetzen bzw. die Umsetzung des Polyamins (B) mit dem Addukt (C) auszuführen und zu diesem Reaktionsprodukt aus (B) und (C) das Polyamidoamin (A) zuzugeben.

Manchmal kann es erforderlich sein, Verdünnungsmittel, im allgemeinen in Mengen von 1 bis 40, vorzugsweise 5 bis 20 %, bezogen auf die wässrige Härtungsmittellösung, zuzugeben. Beispielsweise seien hier genannt: Organische Lösungsmittel, wie Ethylenglykol-Mono- bzw. Diether, Propylenglykol-Mono- bzw. Diether, Butylenglykol-Mono- bzw. Diether von Monoalkoholen mit einem gegebenenfalls verzweigten Alkylrest von 1 bis 6 Kohlenstoffatomen, Tetrahydrofuran, aliphatische Alkohole mit gegebenenfalls verzweigten Alkylresten von 1 bis 12 Kohlenstoffatomen, wie Methanol, Ethanol, Propanol, Butanol, araliphatische oder cycloaliphatische Alkohole wie Benzylalkohol oder Cyclohexanol, (cyclo)aliphatische oder aromatische Kohlenwasserstoffe, wie Hexan, Heptan, Cyclohexan, Toluol, Xylole, Solvesso® oder Ketone, wie Aceton, Methylisobutylketon und Cyclohexanon. Der Siedepunkt dieser Lösungsmittel liegt bevorzugt nicht über 210 °C. Auch Gemische der verschiedenen Verdünnungsmittel sind möglich.

Hydroxylgruppenhaltige Lösungsmittel, wie Benzylalkohol, 2-Methylbenzylalkohol, 1-Phenylethanol, 2-Phenoxyethanol, Furfurylalkohol, Pineöl und Alkohole mit 2 bis 18 Kohlenstoffatomen, wie n-Butanol, Ethylhexylakohol, Ethylglykol, Methylglykol, Methoxypropanol, Ethoxypropanol wirken dabei im allgemeinen beschleunigend auf die Härtungsreaktion.

Die erfindungsgemäßen Härtungsmittel eignen sich zum Härten von polyfunktionellen Epoxidverbindungen, insbesondere zum Härten von wäßrigen Epoxidharzen und wäßrigen Epoxidharz-Dispersionen.

Die erfindungsgemäßen Härter können noch weitere übliche Additive enthalten wie beispielsweise Beschleuniger bzw. Härtungskatalysatoren, weitere Härter und zusätzliche härtbare Harze oder Extenderharze sowie die üblichen Lackadditive wie Pigmente, Pigmentpasten, Antioxidantien, Verlauf- bzw. Verdikkungsmittel (Thixotropierungsmittel), Entschäumer und/oder Netzmittel, Reaktivverdünner, Füllstoffe, flammhemmende Stoffe und dgl. genannt. Diese Additive können den härtbaren Mischungen gegebenenfalls erst unmittelbar vor der Verarbeitung zugegeben werden.

Als Beschleuniger bzw. Härtungskatalysatoren können neben den obigen hydroxylgruppenhaltigen Lösungsmitteln beispielsweise auch Phenole und Alkylphenole mit 1-12 C-Atomen in der Alkylgruppe wie Kresol, die verschiedenen Xylenole, Nonylphenol, Polyphenole wie Bisphenol A und F, OH-gruppenhaltige aromatische Carbonsäuren wie Salicylsäure, Benzoesäure, p-Hydroxybenzoesäure sowie tert. Amine, wie Dimethylaminobenzylamin, 1,3,5-Tris(dimethylamino)phenoludgl. eingesetzt werden.

Als zusätzliche Härter kommen die üblichen Epoxyhärter in Frage, wie basische Härter (Aminhärter), beispielsweise Polyamine, Mannich-Basen und Addukte von Polyaminen (im Überschuß) an Polymeren, wie Polyepoxide; weiterhin phenolmodifizierte Aminhärter sowie übliche Polyamidoamine oder Polyimidazoline, die durch Kondensation von einbasischen Fettsäuren und/oder polymeren Fettsäuren, erhalten durch katalytische Polymerisation von ein- oder mehrfach ungesättigten Fettsäuren oder durch Copolymerisation

von polymerisationsfähigen Verbindungen, wie z.B. Styrol, hergestellt werden. Bezüglich weiterer üblicher Härter sei beispielsweise auf die EP-OS 272 595 verwiesen.

Zusätzlich härtbare Harze sind zum Beispiel Kohlenwasserstoffharze, Phenoxyharze, Phenolharze, Polyurethanharze, Polysulfide (Thiokole), reaktive, flüssige Polymere des Butadiens bzw. entsprechende Acrylnitril/Butadien-Copolymere(Hycar-Typen), während als übliche Extenderharze hier unter anderem nichtreaktive Epoxidharz-Modifizierungsmittel, Teere, Phthalsäureester und Cumaronöle genannt seien.

Geeignete Füllstoffe sind zum Beispiel Quarzmehl, Silicate, Kreide, Gips, Schwerspat, Titandioxid, Ruß, Metallpulver, organische und anorganische Fasern udgl..

Die Härtungsmittel werden vorzugsweise erst unmittelbar vor der Anwendung mit den Epoxidverbindungen, den wäßrigen Epoxidharzen oder wäßrigen Epoxidharz-Dispersionen gemischt.

Aufgrund ihrer bereits angesprochenen hervorragenden anwendungstechnischen Eigenschaften eignen sich die erfindungsgemäßen Härtungsmittel in Kombination mit geeigneten Epoxidharzen und Zusatzstoffen zur Herstellung von Überzügen, Zwischenbeschichtungen, Anstrichmaterialien, Formmassen und härtbaren Massen für die unterschiedlichsten Anwendungsgebiete. Beispielsweise können sie zur Herstellung von Schutz- und/oder Dekorbeschichtungen auf den unterschiedlichsten, insbesondere rauhen und porösen Substraten, wie zum Beispiel Holz, mineralischen Untergründen (z.B. Beton und Stein), Glas, Kunststoffen (z.B. Polyethylen, Polypropylen usw.), Kompositwerkstoffen, Keramik und vorbehandelten oder nicht vorbehandelten Metallen verwendet werden.

Insbesondere sind sie für solche Anwendungszwecke geeignet, bei denen eine hohe Elastizität, verbunden mit guter Haftung gefordert wird und die Verarbeitung in Kombination mit wasserverdünnbaren Epoxidsystemen, vorzugsweise Epoxidharz-Dispersionen, vorgenommen werden soll. Sie sind deshalb besonders geeignet zur Herstellung wasserverdünnbarer Klebstoffe und für die Lackierung von Kunststoffteilen. Sie können auch als Bindemittel für textile, organische und/oder anorganische Materialien und als Zusatz zu Kunststoffzementen dienen.

Im Falle des Einsatzes als Beschichtungsmittel bzw. als überwiegend wäßriger Lack erfolgt die Applikation auf das Substrat nach herkömmlichen Methoden, wie beispielsweise Streichen, Spritzen, Tauchen oder Aufwalzen.

**Beipiele**

**I. Herstellung der Polyamidoamine (A)**

1. 1234 g (1,96 Mol) Polyglycoldisäure ca. 10 -12 Einheiten $-O-CH_2-CH_2-$; SZ ca. 179 mg KOH/g) werden in einem Vierhalskolben mit Rührer, Thermometer und Destillationsapparatur unter Stickstoffatmosphäre mit 595 g (4,37 Mol) m-Xylylendiamin versetzt. Dabei tritt durch Exothermie ein Temperaturanstieg auf ca. 80 °C ein. Innerhalb von 30 Minuten wird weiter auf 150 °C erwärmt und eine Stunde bei 150 °C gehalten, wobei die Destillation von Wasser einsetzt. Innerhalb von zwei Stunden wird dann auf 170 °C geheizt und 6 Stunden bei dieser Temperatur gehalten. Das Kondensationsprodukt hat eine Säurezahl von < 1 mg KOH/g, eine Aminzahl von 145 mg KOH/g und eine Viskosität von 2900 mPa.s (25 °C). Das Wasserstoffaktiväquivalentgewicht (HAV) beträgt 183.
2. 1296 g (2,06 Mol) Polyglycoldisäure ca. 10-12 Einheiten $-O-CH_2-CH_2-$; SZ ca. 179 mg KOH/g) werden mit 704 g (4,13 Mol) Isophorondiamin entsprechend dem Beispiel 1 umgesetzt. Das Kondensationsprodukt hat eine Säurezahl von 1,3 mg KOH/g, eine Aminzahl von 128 mg KOH/g und eine Viskosität von 7480 mPa.s (25 °C). Das HAV beträgt 233.

**II. Polyepoxid-Polyalkylenpolyetherpolyol**

1. 1200 g Polyethylenglycol 1000 (2,4 Val) werden in einem Vierhalskolben mit Rührer, Thermometer und Destillationsapparatur unter Stickstoffatmosphäre zusammen mit 1920 g eines Bisphenol-A-Epoxidharzes, mit einem Epoxidäquivalentgewicht (EV) von 183 (10,49 Val) auf 80 °C erwärmt und mit 6,2 g Anchor 1040 (BF3-Aminkomplex) versetzt. Nun wird innerhalb von 3 Stunden auf 160 °C geheizt und bei dieser Temperatur gehalten, nach einer Stunde 160 °C beträgt der EV 400. Es wird weiter innerhalb 30 Minuten die Temperatur auf 170 °C gesteigert, 0,4 g Anchor 1040 nachgegeben und eine Stunde auf dieser Temperatur gehalten. Der EV liegt bei 417. Die Heizung wird abgeschaltet und nach Erreichen einer Temperatur von 85 °C 164 g Wasser zugegeben. Die Viskosität dieses 95 %igen Polyepoxid-Polyethylenglycoladduktes beträgt 7420 mPa.s (25 °C). Der EV liegt bei 446 (424 bezogen auf Festkörper).

### III. Härtungsmittel (erfindungsgemäß)

1. 102 g m-Xylylendiamin (3,0 Val H), 170 g Isophorondiamin (4,0 Val H), 183 g des Polyamidoamins aus Beispiel I.1 (1,0 Val H) und 12,5 g Wasser werden in einem Vierhalskolben mit Rührer, Thermometer und Destillationsapparatur unter Stickstoff innerhalb von 1,5 Stunden mit 484 g des Polyepoxid-Polyalkylenpolyetherpolyols aus Beispiel II. versetzt. Dabei steigt die Temperatur auf ca. 60 °C. Es werden weitere 18,6 g Wasser zugegeben und die Temperatur innerhalb einer Stunde auf 80 °C erhöht. Nach einer Haltezeit von 3 Stunden wird die Heizung abgestellt und mit 174 g Wasser verdünnt. Das Härtungsmittel hatte die in Tabelle 1 angegebenen Kenndaten.

Die Härtungsmittel gemäß Beispielen 2 bis 7 werden in den in Tabelle 3 angegebenen Äquivalentverhältnissen analog Beispiel III.1 hergestellt.

In den Beispielen 6 und 7 wird das Polyamidoamin aus Beispiel I.2. eingesetzt.

Die in Tabelle 2 aufgeführten Ergebnisse zeigen, daß mit den erfindungsgemäßen Härtungsmitteln hergestellte Beschichtungen insbesondere eine hohe Wasserfestigkeit aufweisen. Außerdem zeigen diese Dispersionen eine sehr gute Stabilität in verdünnter Lösung.

### Erläuterungen zu Tabelle 2

1. Die Staubtrockenheit wird nach DIN 53 150 ermittelt (Bestimmung des Trockengrades von Anstrichen, Trockengrad 1).
2. Die Klebfreiheit wird nach DIN 53 150 bestimmt (Trockengrad 3).
3. Die Topfzeit wird mit Kontrastkarten (Prüfkarten 2854 der Byk Gardner GmbH) festgestellt. Aufzug 200 µm Naßfilm, alle 15 Minuten erfolgt Messung des Glanzabfalls mit 60° Winkel im Byk-micro-TRI-gloss, mit Glanzabfall unter 95 % wird Topfzeit festgelegt.
4. Trübung bezieht sich auf Klarlackfilm 24 Stunden bei 20 °C und 35 % rel. Luftfeuchtigkeit; Bewertung nach DIN 53 230 0 = sehr gut, 5 = sehr schlecht.
5. Pendelhärte nach König (DIN 53 157)
6. Filme nach 24 Stunden in Wasser; Bewertung nach DIN 53 230.
7. 20 %ige Härterlösung wird bei 40 °C gelagert und in 15 Minuten Abständen auf Trübung und Phasentrennung beurteilt.
8. Herstellung der Klarlackfilme:
Die 40 %ige Härterlösung wird mit der Epoxidharz-Dispersion gemischt und ein Film mit 200 µm Spalthöhe (feucht) auf Glasplatten aufgezogen und bei RT getrocknet. Der Film hat eine Trockenschichtdicke von ca. 50 µm.

Tabelle 1

| Erfindungsgemäße Härter | Beispiel | 1 | 2 | 3 | 4 | 5 | 6 | 7 |
|---|---|---|---|---|---|---|---|---|
| m-Xylylendiamin (HAV = 34,0) | ValH | 3,0 | 2,5 | 2,0 | 1,5 | 1,0 | 3,0 | 2,0 |
| Isophorondiamin (HAV = 42,6) | ValH | 4,0 | 4,0 | 4,0 | 4,0 | 4,0 | 4,0 | 4,0 |
| Polyamidoamin (A) nach Beispiel I.1. (HAV = 183) | ValH | 1,0 | 1,5 | 2,0 | 2,5 | 3,0 | - | - |
| Polyamidoamin (A) nach Beispiel I.2. (HAV = 233) | ValH | - | - | - | - | - | 1,0 | 2,0 |
| Polyepoxid-Polyalkylenpolyetherpolyol (C) nach Beispiel II.1. EV 420 | Val | 1,15 | 1,15 | 1,10 | 1,15 | 1,10 | 1,10 | 1,10 |
| HAV (bezogen auf 80 %ige Lösung) | | 166 | 185 | 193 | 212 | 220 | 175 | 215 |
| Visk. 25 °C der 80 %igen Lösung | mPa.s | 10880 | 11310 | 9340 | 7420 | 7940 | 10460 | 9230 |
| Wasserverdünnbarkeit [1] | 80 % | 0 | 0 | 0 | 0 | 0 | 0 | 0 |
| | 60 % | 0 | 0 | 0 | 0 | 0 | 0 | 0 |
| | 40 % | 0 | 0 | 0 | 0 | 0 | 0 | 0 |
| | 20 % | 2 | 2 | 2 | 2 | 2 | 2 | 2 |

1) Bewertung nach DIN 53 230

Tabelle 2

| wäßrige Epoxidharz-Dispersion Beispiel | | 1 | 2 |
|---|---|---|---|
| Härter Beispiel | | 1 | 2 |
| Einwaage 40%ige Härterlösung | g | 20 | 20 |
| Einwaage Epoxidharz-Dispersion VEP 2385$^R$ HOECHST AG, EV 510 auf Festkörper | g | 52 | 48,8 |
| Fk der EP-Dispersion | % | 56,5 | 56,5 |
| Filmprüfung[8)] | | | |
| Staubtrockenheit[1)] | nach h | 2,5 | 2,5 |
| Klebfreiheit[2)] | nach h | 6 | 7,5 |
| Topfzeit[3)] | h | 1,3 | 1,5 |
| Trübung[4)] | | 0-1 | 0-1 |
| Pendelhärte[5)] | (24 h) s<br>(48 h) s | 145 | 126 |
| Wasserfestigkeit[6)] | | 1-2 | 1-2 |
| Pendelhärte nach[5)] Wasserlagerung | (nach h) s | 74(24) | 68(24) |
| Stabilität einer 20%igen Härterlösung bei 40°C | h | 0,75-1 | > 48 |

Tabelle 2 (Fortsetzung)

| wäßrige Epoxidharz-Dispersion Beispiel | | 3 | 4 |
|---|---|---|---|
| Härter Beispiel | | 3 | 4 |
| Einwaage 40%ige Härterlösung | g | 20 | 20 |
| Einwaage Epoxidharz-Dispersion VEP 2385$^R$ HOECHST AG, EV 510 auf Festkörper | g | 44,5 | 42,2 |
| Fk der EP-Dispersion | % | 56,5 | 56,5 |
| Filmprüfung[8] | | | |
| Staubtrockenheit[1] | nach h | 3,0 | 4,0 |
| Klebfreiheit[2] | nach h | 8,0 | 9,0 |
| Topfzeit[3] | h | 1,7 | 2,0 |
| Trübung[4] | | 0-1 | 0-1 |
| Pendelhärte[5] | (24 h) s<br>(48 h) s | 119 | 106 |
| Wasserfestigkeit[6] | | 1-2 | 1-2 |
| Pendelhärte nach[5] Wasserlagerung | (nach h) s | 63(24) | 58(24) |
| Stabilität einer 20%igen Härterlösung bei 40°C | h | > 48 | > 48 |

Tabelle 2 (Fortsetzung)

| wäßrige Epoxidharz-Dispersion Beispiel | | 5 | 6 | 7 |
|---|---|---|---|---|
| Härter Beispiel | | 5 | 6 | 7 |
| Einwaage 40%ige Härterlösung | g | 20 | 20 | 20 |
| Einwaage Epoxidharz-Dispersion VEP 2385R HOECHST AG, EV 510 auf Festkörper | g | 40,6 | 51,3 | 41,6 |
| Fk der EP-Dispersion | % | 56,5 | 56,5 | 56,5 |
| Filmprüfung[8)] | | | | |
| Staubtrockenheit[1)] | nach h | 4,0 | 0,8 | 1,5 |
| Klebfreiheit[2)] | nach h | 9,0 | 5,5 | 6,0 |
| Topfzeit[3)] | h | 2,2 | 1,75 | 2,5 |
| Trübung[4)] | | 1 | 0-1 | 1 |
| Pendelhärte[5)] | (24 h) s<br>(48 h) s | 97 | 141 | 124 |
| Wasserfestigkeit[6)] | | 1-2 | 1-2 | 1-2 |
| Pendelhärte nach[5)] Wasserlagerung | (nach h) s | 52(24) | 75(24) | 66(24) |
| Stabilität einer 20%igen Härterlösung bei 40°C | h | > 48 | 0,5 | 0,5-0,75 |

## Patentansprüche

1. Härtungsmittel für Epoxidharze bestehend aus Umsetzungsprodukten von
   (A) Polyamidoaminen, die erhalten wurden durch Polykondensation von (a) Gruppe Dicarbonsäuren, die Oxalkylengruppen enthalten, oder deren Derivate mit (b) Polyaminen, die mindestens zwei, mit (a) kondensationsfähige Aminogruppen enthalten,
   (B) Polyaminen mit mindestens zwei sekundären Aminogruppen und
   (C) Addukten aus (c) Polyepoxidverbindungen und (d) Polyalkylenpolyetherpolyolen.

2. Härtungsmittel nach Anpruch 1, dadurch gekennzeichnet, daß als Verbindung (a) solche der Formel (I)

   $R^2\text{-OOC-CH}_2\text{-[-O-R}^1\text{-]}_n\text{O-CH}_2\text{-COOR}^2$ (I)

   eingesetzt werden, in der bedeuten

$R^1$ = Alkylenrest mit 2 bis 5 C-Atomen;
$R^2$ = unabhängig voneinander Wasserstoff oder Alkylrest mit 1 bis 6, C-Atomen;
n = 0 oder eine ganze Zahl von 1 bis 300.

3. Härtungsmittel nach Anpruch 2, dadurch gekennzeichnet, daß $R^1$ Formel (I) einen Ethylenrest und n 1 bis 50 bedeuten.

4. Härtungsmittel nach mindestens einem der Ansprüche 1 bis 3, dadurch gekennzeichnet, daß die Polyamine (b) die Formel (II)

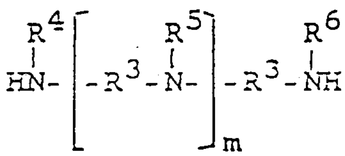

(II)

besitzen, in der bedeuten

$R^3$ = unabhängig voneinander zweiwertiger Kohlenwasserstoffrest mit 1 bis 20, vorzugsweise Alkylenrest mit 1 bis 20 C-Atomen, Cycloalkylenrest mit 5 bis 12 C-Atomen oder Aralkylenrest mit 7 bis 12 C-Atomen;
$R^4$, $R^5$, $R^6$ = unabhängig voneinander Wasserstoff, Kohlenwasserstoffrest mit 1 bis 20 C-Atomen, vorzugsweise Alkylrest mit 1 bis 20 C-Atomen, Cycloalkylenrest mit 5 bis 12 C-Atomen, Aralkylenrest mit 7 bis 12 C-Atomen, wobei diese Reste auch durch Heteroatome unterbrochen sein können oder
$R^4$ und $R^5$ = Teil eines Ringsystems mit 3 bis 8 C-Atomen;
m = 0 oder eine ganze Zahl von 1 bis 8.

5. Härtungsmittel nach mindestens einem der Ansprüche 1 bis 4, dadurch gekennzeichnet, daß als Verbindungen (a) 3,6-Dioxaoctandisäure, 3,6,9-Trioxaundecandisäure oder Polyglycoldisäure mit einem Molgewicht von 400 bis 600 und als Polyamine (b) 2-Methylpentadiamin, Diethylentriamin, Triethylentetramin, Isophorondiamin, m-Xylylendiamin oder Trimethylhexamethylendiamin eingesetzt werden.

6. Härtungsmittel nach mindestens einem der Ansprüche 1 bis 5, dadurch gekennzeichnet, daß als Amine (B) aliphatische, cycloaliphatische, heterocyclische und araliphatische Polyamine mit mindestens 2 sekundären Aminogruppen eingesetzt werden.

7. Härtungsmittel nach mindestens einem der Ansprüche 1 bis 6, dadurch gekennzeichnet, daß als Amine 2-Methylpentadiamin, Diethylentriamin, Triethylentetramin, Isophorondiamin, m-Xylylendiamin oder Trimethylhexamethylendiamin eingesetzt werden.

8. Härtungsmittel nach mindestens einem der Ansprüche 1 bis 7, dadurch gekennzeichnet, daß Addukte (C) aus Polyepoxidverbindungen (c) und Polyalkylenpolyetherpolyolen (d), erhalten durch Umsetzung im Äquivalentverhältnis von c : d = 2: (0,1 bis 1,5), eingesetzt werden.

9. Härtungsmittel nach mindestens einem der Ansprüche 1 bis 8, dadurch gekennzeichnet, daß die Addukte (C) ein mittleres Molekulargewicht Mn von 200 bis 20000 besitzen.

10. Wäßrige Epoxidharz-Dispersionen enthaltend ein Härtungsmittel nach einem oder mehreren der Ansprüche 1 bis 9.

Europäisches Patentamt

# EUROPÄISCHER RECHERCHENBERICHT

Nummer der Anmeldung

EP 93 10 2698

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,Y | EP-A-0 379 107 (HOECHST)<br>* Seite 4, Zeile 41 - Zeile 46 *<br>* Seite 6, Zeile 28 - Zeile 34; Ansprüche; Beispiel I.11 *<br>--- | 1-10 | C08G59/18<br>C08L63/00 |
| Y | GB-A-1 131 543 (CIBA LIMITED)<br>* Seite 2, Zeile 9 - Zeile 34; Ansprüche *<br>--- | 1-10 | |
| A | EP-A-0 203 349 (SCHERING AKTIENGESELLSCHAFT)<br>* Ansprüche *<br>--- | 1 | |
| A | FR-A-2 068 390 (RESYN CORPORATION)<br>* Ansprüche *<br>--- | 1 | |
| A | EP-A-0 346 742 (HOECHST)<br>* Ansprüche *<br>----- | 1 | |

RECHERCHIERTE SACHGEBIETE (Int. Cl.5 )

C08G
C08L

Der vorliegende Recherchenbericht wurde für alle Patentansprüche erstellt

| Recherchenort | Abschlußdatum der Recherche | Prüfer |
|---|---|---|
| DEN HAAG | 01 JULI 1993 | DERAEDT |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)